# NEUE EUROPÄISCHE PATENTSCHRIFT

(11) **EP 0 118 796 B2**
(45) Veröffentlichungstag und Bekanntmachung des Hinweises auf die Entscheidung über den Einspruch: **13.01.1993**
(45) Hinweis auf die Patenterteilung: 15.03.1989
(21) Anmeldenummer: 84101623.1
(22) Anmeldetag: 16.02.1984
(51) Int. Cl.: B60R 13/02

(54) **Verfahren zum Herstellen eines Innenverkleidungsteils, insbesondere für Fahrzeuge**
Manufactoring process of an interior liner, especially for vehicles
Procédé de fabrication d'un revêtement intérieur, notamment pour véhicules

(30) Priorität: 15.03.1983 DE 3309131
(43) Veröffentlichungstag der Anmeldung: 19.09.1984
(73) Patentinhaber: AUDI AG, 85045 Ingolstadt (DE)
(72) Erfinder: Repper, Helmut, D-8070 Ingolstadt (DE); Engel, Wilfried, D-8070 Ingolstadt (DE); Trübenbach, Karl, D-8070 Ingolstadt (DE)
(74) Vertreter: Le Vrang, Klaus

(56) Entgegenhaltungen:
- DE-A- 2 739 823
- DE-C- 430 943
- US-A- 2 597 401
- US-A- 3 953 067

## Beschreibung

Die Erfindung bezieht sich auf ein Verfahren zum Herstellen eines Innenverkleidungsteiles für Fahrzeuge, welches eine Nut und einen darin aufgenommenen Rand eines Stoffes, Leders oder eines ähnlichen Materials aufweist.

Zur Herstellung eines Innenverkleidungsteiles mit einem Träger, welcher sichtseitig folienkaschierte Abschnitte und mindestens einen angrenzenden, mit Stoff, Leder oder ähnlichem Material überzogenen Bereich aufweist, wird in der Praxis ein Verfahren eingesetzt, bei dem die Folie und der Stoff durch Schweißung miteinander verbunden sind. Die Schweißnaht verbindet nicht nur beide Materialien, sondern stellt auch optisch eine Trennung zwischen den unterschiedlichen Oberflächen dar.

Die Herstellung eines derartigen Innenverkleidungsteiles erfolgt in der Weise, daß zunächst der Träger des Innenverkleidungsteiles auf der entsprechenden Seite mit Klebstoff besprüht und anschließend der zugeschnittene Stoff aufgebracht wird. Das nachfolgende Kaschieren der übrigen Trägeroberfläche mit einer luftundurchlässigen Folie erfolgt in bekannter Weise mittels Vakuum. Anschließend wird die Folie und der Stoff an der Übergangsstelle mittels Hochfrequenzschweißung verbunden. Eine Schweißelektrode bildet dabei eine gleichförmige Naht und plastifiziert die Folie, so daß eine innige Verbindung zwischen der Folie und dem Stoff geschaffen wird. An der Schweißelektrode ist eine Schneidkante angebracht, wodurch gleichzeitig bei der Elektrodenbewegung die Folie über den Stoffeld abgeschnitten oder angeritzt wird, so daß diese anschließend von Hand abgezogen werden kann.

Von Nachteil ist, daß für das Schweißverfahren nicht alle Stoffarten geeignet und die Verwendung von Leder unmöglich ist. Will man diese Materialien mit dem Träger verbinden, dann besteht nur die Möglichkeit, die nicht verschweißbaren Materialien auf einem zweiten Träger festzulegen und diesen dann - beispielsweise durch eine Clipsverbindung - zu befestigen. Abgesehen davon, daß die Schweißnaht oft als störend empfunden wird, läßt sich das Schweißverfahren in der Praxis nur dann zufriedenstellend einsetzen, wenn die Schweißnaht in einer Ebene verläuft. Selbst dann erfordert die Schweißung eine aufwendige Überwachung der Stromstärke und des Anpreßdruckes, um eine gleichmäßige Schweißnaht zu erreichen und ein Durchbrennen oder mangelhafte Schweißstellen zu vermeiden.

Aus der DE-C-430 943 ist ein Innenverkleidungsteil für Fahrzeuge bekannt, welches einen mit Stoff, Leder oder ähnlichem Material überzogenen Bereich aufweist. Zur Befestigung dieses Materials ist eine Nut ausgebildet, in welche der Randbereich des Überzugsmaterials eingeschoben und dort durch Klebung und/oder Klemmung und/oder eine Klemmleiste gehalten ist. Es wird also nur eine Art von Überzugsmaterial auf dem Innenverkleidungsteil fixiert. Das Problem, nämlich Stoff bzw. Leder und eine Folie an einer gemeinsamen Stoßstelle miteinander zu verbinden, tritt hier nicht auf.

Der Erfindung liegt die Aufgabe zugrunde, ein Verfahren zum Herstellen eines Innenverkleidungsteiles anzugeben, durch welches es in wirtschafflicher Weise ermöglicht ist, beliebige Überzugsmaterialien ohne das Erfordernis einer Schweißung in einer optisch ansprechenden Weise auf dem Innenverkleidungsteil festzulegen.

Die Aufgabe kann durch jedes der in den Ansprüchen 1, 2 angegebenen Verfahren gelöst werden.

Allen Verfahren ist gemeinsam, daß ein Träger (der selbstverständlich auch durch das Innenverkleidungsteil selbst gebildet sein kann) verwendet wird, welcher an der Übergangsstelle zwischen Folie und Stoff eine Nut aufweist. In diese Nut werden die Ränder der Folie und des Stoffes eingeschoben und dort durch Klebung und/oder Klemmung gehalten. Durch diese Vorgehensweise entfällt der aufwendige Schweißvorgang und damit die meist nicht erwünschte Schweißnaht. Da keine Wärmebehandlung (Schweißen) notwendig ist, bestehen bei der Auswahl des Bezugsstoffes keine Einschränkungen ; es ist also auch Leder einsetzbar. Von besonderem Vorteil ist, daß die Übergangsstelle zwischen Folie und Stoff nicht mehr in einer Ebene liegen muß, sondern auch räumlich gekrümmt sein kann.

Besonders vorteilhaft ist, wenn die Nut einen mit Stoff bezogenen Bereich umschließt und dieser Bereich des Trägers gegenüber den angrenzenden, mit Folie kaschierten Bereichen erhöht ausgebildet ist. Durch diese Ausbildung läßt sich in einfacher Weise eine Polstereffekt erzielen, ohne daß dafür zusätzliche Materialien eingesetzt werden müssen.

Zu Anspruch 1 ist anzumerken, daß das Ausschneiden der Folie in dem für den Stoffbezug vorgesehen Bereich besonders einfach durch einen Schneidestempel erfolgen kann, welcher der umlaufenden Kontur der Nut entspricht. Die Festlegung des Bezugstoffes kann in der Weise erfolgen, daß das Innenverkleidungsteil mit Klebstoff bestrichen wird oder aber Klebebänder eingesetzt werden.

Das Einscheiben der Ränder des Bezugstoffes bzw. der Folie kann von Hand geschehen, beispielsweise durch Verwendung eines geeigneten Hilfswerkzeuges, welches entlang der Nut geführt wird. Es ist jedoch auch möglich, diesen Arbeitsgang zu mechanisieren, etwa durch einen automatischen Stempel.

Besonders vorteilhaft ist, wenn zwischen den Rändern der Folie und des Stoffes/Leders ein Keder eingebracht wird, welcher am Grund der Nut festgelegt ist und dessen Kopf die Folie und den Stoff/Leder auf deren Sichtseiten übergreift. Durch den Keder können die Ränder der Folie und des Stoffes alleinig oder zusätzlich in der Nut gehalten werden. Günstig ist dabei, wenn die Nut stufenförmig aufgebaut ist und die unterste, von Folie und Stoff freie Stufe den Keder hält. Der Keder kann die unterschiedlichsten Formen aufweisen und beispielsweise mit einer Dekoreinlage versehen sein.

Zwei Ausführungsbeispiele der Erfindung sind in der Zeichnung dargestellt und werden nachstehend näher beschrieben. Es zeigt
Fig. 1 in perspektivischer Darstellung einen Ausschnitt der Türverkleidung eines Personenkraftwagens und
Fig. 2 ein zweites Ausführungsbeispiel bei Verwendung eines Keders.

Eine Türverkleidung weist einen Träger 1 auf, auf den bereichsweise eine Folie 3 kaschiert ist und dessen von der Folie 3 freie Bereiche mit einem Stoff 5 überzogen sind. An der Übergangsstelle zwischen Folie 3 und Stoff 5 ist im Träger 1 eine durchgehende Nut 7 ausgebildet, in welcher die Ränder der Folie 3 und des Stoffes 5 eingeschoben und fixiert sind.

Die Festlegung der Folie 3 bzw. des Stoffes 5 auf dem Träger 1 kann beispielsweise dadurch erfolgen, daß zunächst der zugeschnittene Stoff 5 an der vorgesehenen Stelle auf den kleberbeschichteten Träger 1 aufgelegt und der Rand des Stoffes 5 in die Nut 7 mit einem Hilfswerkzeug eingeschoben wird. Anschließend wird der mit dem Stoff 5 teilweise bezogene Träger 1 in eine Vorrichtung eingelegt, in welcher in bekannter Weise die Folie 3 mittels Vakuum auf den Träger 1 kaschiert wird.

Nun ist es erforderlich, den mit Folie 3 überzogenen Stoff 5 freizulegen. Dabei wird mit einem Schneidefinger die Folie 3 so ausgeschnitten, daß ihr Rand noch um einen Betrag, welcher etwa der Tiefe der Nut entspricht, in den vom Stoff 5 begrenzten Bereich einragt. Abschließend muß nur noch dieser Rand in die Nut 7 eingeschoben werden, in welcher er durch Klemmung und Kleberreste gehalten wird.

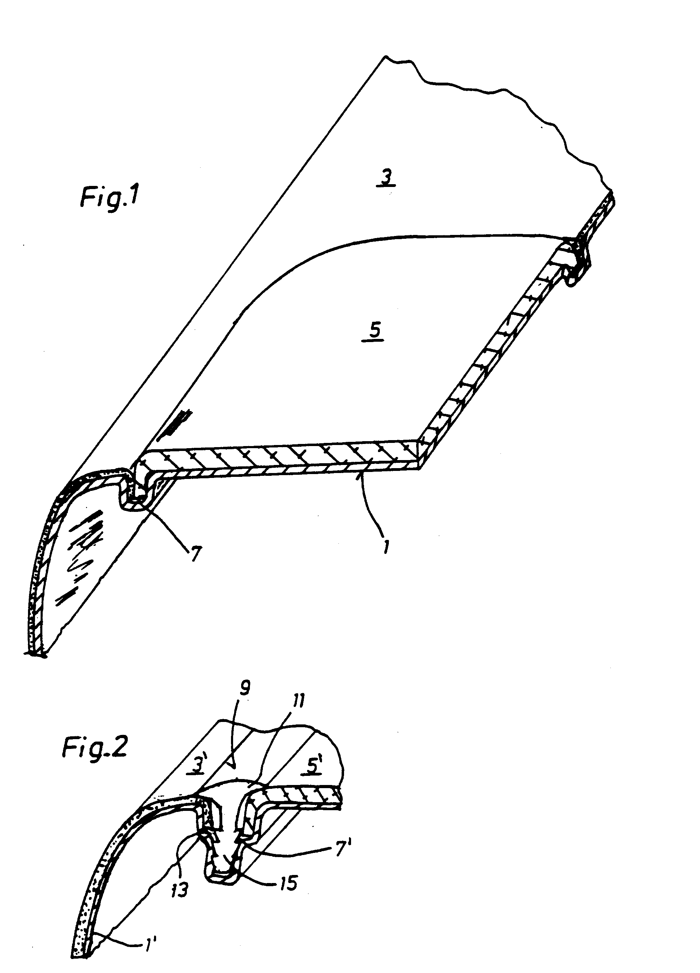

Die Fig. 2 zeigt ein Ausführungsbeispiel, wobei die Nut 7' stufenförmig aufgebaut ist und ein Keder 9 mit seinem Kopf 11 die Folie 3' und den Stoff 5' zusätzlich sichert. Die Ränder der Folie 3' bzw. des Stoffes 5' sich nur bis zum ersten Absatz 13 der Nut 7' geführt, so daß der Fuß 15 des Keders 9 unmittelbar an den Wänden der untersten Stufen anliegt.

## Patentansprüche

1. Verfahren zum Herstellen eines Innenverkleidungsteiles für Fahrzeuge, welches eine Nut und einen darin aufgenommenen Rand eines Stoffes, Leders aufweist, gekennzeichnet durch folgende Verfahrensschritte :
a) der mit einer Folie zu überziehende und durch die Nut begrenzte Bereich des Innenverkleidungsteiles wird mit Kleber versehen.
b) auf der mit Kleber behandelten Fläche wird die Folie, welche sich auch über die Nut hinaus in den nicht behandelten, zur Aufnahme von Stoff/Leder vorgesehenden Bereich erstreckt, aufkaschiert,
c) der mit Stoff/Leder zu überziehende Bereich wird von der Folie freigeschnitten, derart, daß ein in diesen Bereich überstehender, der Tiefe der Nut entsprechender Rand verbleibt,
d) der Rand der Folie wird in die Nut eingeschoben,
e) der mit Stoff/Leder zu überziehende und von der Nut begrenzte Bereich wird zur Festlegung des Stoffes/Leders vorbereitet, wobei auf das Innenverkleidungsteil ein Klebemittel aufgebracht wird,
f) der Stoff oder das Leder, welche in den Abmessungen an den mit diesem Material zu überziehenden Bereich unter Berücksichtigung einer der Tiefe der Nut entsprechenden Zugabe angepaßt sind, werden aufgelegt und
g) die Ränder des Stoffes/Leders in die Nut eingeschoben, wo sie durch Klemmung und/oder Klebung gehalten werden.

2. Verfahren zum Herstellen eines Innenverkleidungsteiles für Fahrzeuge, welches eine Nut und einen darin aufgenommenen Rand eines Stoffes, Leders aufweist, gekennzeichnet durch folgende Verfahrensschritte :
a) das Innenverkleidungsteil wird auf der gesamten zu überziehenden und auch die Nut umfassenden Seite mit Kleber versehen,
b) auf den mit Stoff oder Leder zu überziehenden und von der Nut begrenzten Bereich des Innenverkleidungsteiles wird der Stoff oder das Leder, welche in den Abmessungen an den zu überziehenden Bereich einschließlich einer der Tiefe der Nut entsprechenden Zugabe angepaßt sind, aufgelegt,
c) die Ränder des Stoffes/Leders werden in die Nut eingeschoben,
d) auf das Innenverkleidungsteil wird eine Folie aufgebracht (kaschiert),
e) der mit Stoff/Leder zu überziehende Bereich des Innenverkleidungsteils wird von der Folie freigeschnitten, derart, daß ein in diesen Bereich überstehender, der Tiefe der Nut entsprechender Rand verbleibt.
f) der Rand der Folie wird in die Nut eingeschoben, wo er zusammen mit dem Rand des Stoffes/Leders durch Klemmung und/oder Klebung gehalten ist.

3. Verfahren nach einem der Ansprüche 1 bis 3, dadurch gekennzeichnet, daß zwischen den Rändern der Folie und des Stoffes/Leders ein Keder eingebracht wird, welcher am Grund der Nut festgelegt ist und dessen Kopf die Folie und den Stoff/Leder auf deren Sichtseiten übergreift.

## Claims

1. Process for manufacturing a vehicle interior liner having a groove and received therein an edge of a cloth or leather,
characterised by comprising the following steps:
a) the region of the interior liner to be covered by a film and which is bounded by a groove is coated with adhesive,
b) the film, which also extends past the groove into the untreated region provided for receiving cloth or leather, is laminated onto the surface treated with adhesive,
c) the region to be covered by cloth or leather is cut free of the film, leaving an edge corresponding to the depth of the groove and projecting into the latter region,
d) the edge of the film is pushed into the groove,
e) the region to be covered by cloth or leather and bounded by the groove is prepared for attachment of the cloth or leather, and an ad he- sive is applied to the interior liner,
f) the cloth or the leather, the dimensions of which are adapted to fit the region being covered by said material, with an allowance corresponding to the depth of the groove, is placed in position and
g) the edges of the cloth or leather are pushed into the groove, where they are held by pinching and/or gluing.

2. Process for manufacturing a vehicle interior liner having a groove and received therein an edge of a cloth or leather,
characterised by comprising the following steps:
a) adhesive is applied to the interior liner on the whole of the side that is to be covered and also incorporates the groove,
b) the cloth or the leather, the dimensions of which are adapted to fit the region being covered, including an allowance corresponding to the depth of the groove, is placed on the region of the interior liner being covered by cloth or leather and surrounded by the groove,
c) the edges of the cloth or leather are pushed into the groove,
d) a film is put (laminated) onto the interior liner,
e) the region of the interior liner to be covered by cloth or leather is cut free of the film, leaving an edge corresponding to the depth of the groove and projecting into the latter region,
f) the edge of the film is pushed into the groove, where it is held together with the edge of the cloth or leather by pinching and/or gluing.

3. Process according to either of claims 1 or 2, characterised by introducing between the edges of the film and of the cloth or leather a piping strip which is located at the base of the groove and whose head overlaps the film and the cloth or leather on the sides thereof that are exposed to view.

## Revendications

1. Procédé de fabrication d'une partie de revêtement intérieur pour véhicules, qui comporte une rainure dans laquelle est engagé un bord d'un tissu ou d'un cuir, caractérisé par les étapes opératoires suivantes :
a) la zone de la partie de revêtement intérieur qui est à recouvrir par une feuille et qui est délimitée par la rainure est pourvue d'adhésif,
b) sur la surface revêtue d'adhésif, on colle la feuille, qui s'étend également par-dessus la rainure jusque dans la zone non-traitée et prévue pour recevoir du tissu/cuir,
c) la zone à revêtir de tissu/cuir est libérée de la feuille par sectionnement de telle sorte qu'il subsiste au-dessus de cette zone un bord correspondant à la profondeur de la rainure,
d) le bord de la feuille est engagé dans la rainure,
e) la zone à revêtir de tissu/cuir et délimitée par la rainure est préparée en vue d'une fixation du tissu/cuir, auquel cas un adhésif est déposé sur la partie de revêtement intérieur,
f) le tissu ou le cuir, qui ont des dimensions adaptées à la zone à recouvrir de cette matière en tenant compte d'une addition correspondant à la profondeur de la rainure, sont mis en place, et
g) les bords du tissu/cuir sont engagés dans la rainure où ils sont maintenus par serrage et/ou collage.

2. Procédé de fabrication d'une partie de revêtement intérieur de véhicules, qui comporte une rainure dans laquelle est engagé le bord d'un tissu ou de cuir, caractérisé par les étapes opératoires suivantes :
a) la partie de revêtement intérieur est pourvue d'adhésif sur tout le côté à recouvrir et comportant également la rainure,
b) sur la zone de la partie de revêtement intérieur qui est à recouvrir de tissu ou de cuir et qui est délimitée par la rainure, on met en place le tissu ou le cuir, qui ont des dimensions adaptées à la zone à recouvrir, y compris une addition correspondant à la profondeur de la rainure,
c) les bords du tissu/cuir sont engagés dans la rainure,
d) sur la partie de revêtement intérieur est mise en place une feuille (par collage),
e) la zone de la partie de revêtement intérieur qui est à recouvrir de tissu/cuir est libérée de la feuille par sectionnement de telle sorte qu'il subsiste un bord placé au-dessus de cette zone et correspondant à la profondeur de la rainure,
f) le bord de la feuille est engagé dans la rainure où il est maintenu, en même temps que le bord du tissu/cuir par serrage et/ou par collage.

3. Procédé selon la revendication 1 ou 2, caractérisé en ce qu'on engage entre les bords de la feuille et du tissu/cuir une moulure qui est fixée au fond de la rainure et dont la tête recouvre la feuille et le tissu/cuir sur leurs côtés visibles.
